# EUROPEAN PATENT SPECIFICATION

(11) **EP 2 296 023 B1**
(45) Date of publication and mention of the grant of the patent: **09.08.2017**
(21) Application number: 09794219.7
(22) Date of filing: 09.01.2009
(51) Int. Cl.: G02B 6/36, G02B 6/38

(54) **OPTICAL CONNECTOR AND METHOD FOR ASSEMBLING OPTICAL CONNECTOR**
OPTISCHER STECKVERBINDER UND VERFAHREN ZUR MONTAGE EINES OPTISCHEN STECKVERBINDERS
CONNECTEUR OPTIQUE ET PROCÉDÉ D'ASSEMBLAGE DE CONNECTEUR OPTIQUE

(30) Priority: 10.07.2008 JP 2008180694
(43) Date of publication of application: 16.03.2011
(73) Proprietor: Fujikura Ltd., Tokyo 135-8512 (JP)
(72) Inventor: SAITO, Daigo, Sakura-shi Chiba 285-8550 (JP); TAKIZAWA, Kazuhiro, Sakura-shi Chiba 285-8550 (JP); TAN, Serin Khee Yen, Sakura-shi Chiba 285-8550 (JP)
(74) Representative: Cabinet Plasseraud
(86) International application number: PCT/JP2009/050204
(87) International publication number: WO 2010/004772

(56) References cited:
- JP-A- S5 748 706
- JP-A- 2007 187 724
- JP-U- 2 007 612
- US-A- 5 062 683
- US-A1- 2005 244 108
- US-B1- 7 241 056
- DAIGO SAITO ET AL.: 'Hikari Fiber Cord-yo Genba Kumitate Hikari Connector' 2008 NEN THE INSTITUTE OF ELECTRONICS, INFORMATION AND COMMUNICATION ENGINEERS SOGO TAIKAI KOEN RONBUNSHU TSUSHIN 2 05 March 2008, page 301, XP008139186

## Description

### Technical Field

The present invention relates to an optical connector, and more particularly, to a site assembly-type optical connector that can be assembled without using a dedicated tool in a site other than a factory, and a method of assembling the optical connector.

Priority is claimed on Japanese Patent Application No. 2008-180694, filed on July 10, 2008, the contents of which are incorporated herein by reference.

### Background Art

As an optical connector that is assembled onto a tip of an optical fiber cable (for example, an optical cord) including tension fibers, there is an optical connector having a structure for retaining tension fibers.

As a retaining structure, there is, for example, a structure for caulking and fixing tension fibers to a stop ring using a caulking member (see Patent Documents 1 and 2).

In the caulking fixing structure, the caulking member is fixed by a dedicated tool.
[Patent Document 1] Japanese Unexamined Patent Application, First Publication No. H10-206687
[Patent Document 2] Specification of U.S. Patent No. 6,206,581

### Disclosure of the Invention

### Problem that the invention is to solve

However, since a dedicated tool is needed in the optical connector, an assembling operation is troublesome and there is a demand for an easier operation.

Further, in a general-purpose caulking fixing structure, it is difficult to detach a caulking member once it has been fixed. Accordingly, if tension bodies are insufficiently fixed for any reason, an operation for fixing a new caulking member to a new terminal needs to be performed after a caulked portion is released by the removal of a portion of the optical fiber where the caulking member is fixed. For this reason, there has been a problem in terms of assembly yield of the optical connector.

The present invention has been made in consideration of the above-mentioned circumstances, and an object of the present invention is to provide an optical connector that is easily assembled and is excellent in terms of assembly yield, and a method of assembling the optical connector.

### Means for solving the Problem

According to the present invention, there is provided an optical connector according to claim 1. Additional features are defined in dependent claims 2-6.

According to the present invention, there is also provided a method of assembling an optical connector according to claim 7. Additional features are defined in dependent claims 8-9.

### Effects of the invention

The optical connector according to the present invention has a structure where the fixing cap is screwed onto the fixing portion so as to fix the tension bodies. A dedicated tool is needed in a general-purpose caulking fixing structure. However, since screwing has been employed in the present invention, a dedicated tool is not needed. Therefore, the optical connector is easily assembled.

Further, since screw fixing is employed, it may be possible to firmly fix the tension bodies to the housing and provide sufficient strength to a connection portion connected to the optical fiber cable.

Furthermore, since the number of parts of a fixing structure is small in the optical connector according to the present invention and the structure of the optical connector is simple, it may be possible to reduce the number of assembling processes. Since the structure of the optical connector is simple, it may be possible to reduce the size of the optical connector, that is, to reduce the entire length of the optical connector.

In the general-purpose caulking fixing structure, it is difficult to detach a caulking member once it has been fixed. Accordingly, if the tension bodies are insufficiently fixed due to an incorrect operation or the like, an operation for fixing a caulking member to a new terminal needs to be performed after the removal of a portion of the optical fiber where the caulking member is fixed.

In contrast, screwing is employed in the optical connector according to the present invention. Accordingly, if the tension bodies are insufficiently fixed due to an incorrect operation or the like, it may be possible to mount the fixing cap again after separating the fixing cap. Therefore, the yield of the assembling of the optical connector becomes high.

### Brief Description of the Drawings

FIG. 1 is a sectional view of an optical connector according to an embodiment not in accordance with the claimed invention.
FIG. 2 is a perspective view showing the appearance of the optical connector shown in FIG. 1.
FIG. 3 is an enlarged view of main portions of the optical connector shown in FIG. 1, and is a sectional view taken along a line A-A of FIG. 2.
FIG. 4 is an enlarged view of the main portions of the optical connector shown in FIG. 1, and is a sectional view taken along a line B-B of FIG. 2.
FIG. 5 is a view of a stop ring main body of the optical connector shown in FIG. 1 as seen from the rear side.
FIG. 6 is a perspective view of a fixing portion of the stop ring main body of the optical connector shown in FIG. 1.
FIG. 7 is a cross-sectional view of a plug frame and a clamping portion of the optical connector shown in FIG. 1.
FIG. 8 is a cross-sectional view of the plug frame and the clamping portion of the optical connector shown in FIG. 1.
FIG. 9 is a view illustrating a process for assembling the optical connector shown in FIG. 1.
FIG. 10 is a view illustrating a process following the previous drawing.
FIG. 11 is a view illustrating a process following the previous drawing.
FIG. 12 is a sectional view of an optical connector according to another embodiment not in accordance with the claimed invention.
FIG. 13 is a perspective view of a fixing portion of the optical connector shown in FIG. 12.
FIG. 14 is a perspective view of a protective tube of the optical connector shown in FIG. 12.
FIG. 15 is a view illustrating a process for assembling the optical connector shown in FIG. 12.
FIG. 16 is a view illustrating a process following the previous drawing.

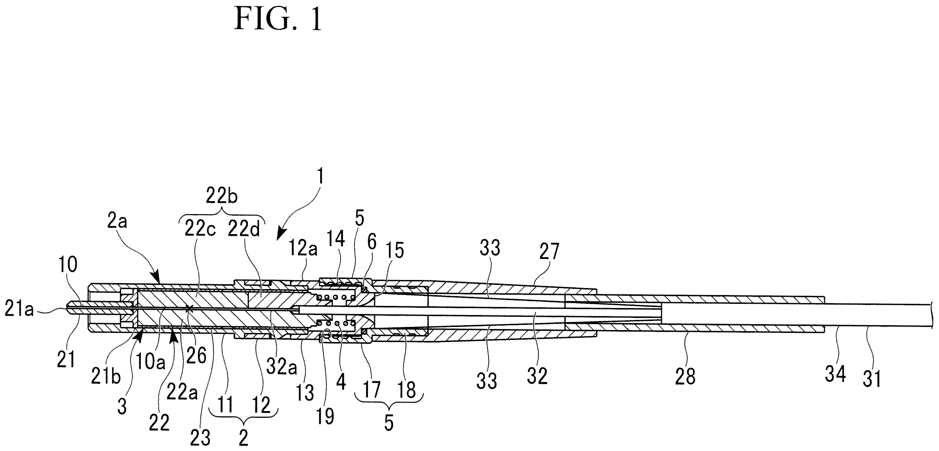

FIG. 1 is a view illustrating a process following the previous drawing.

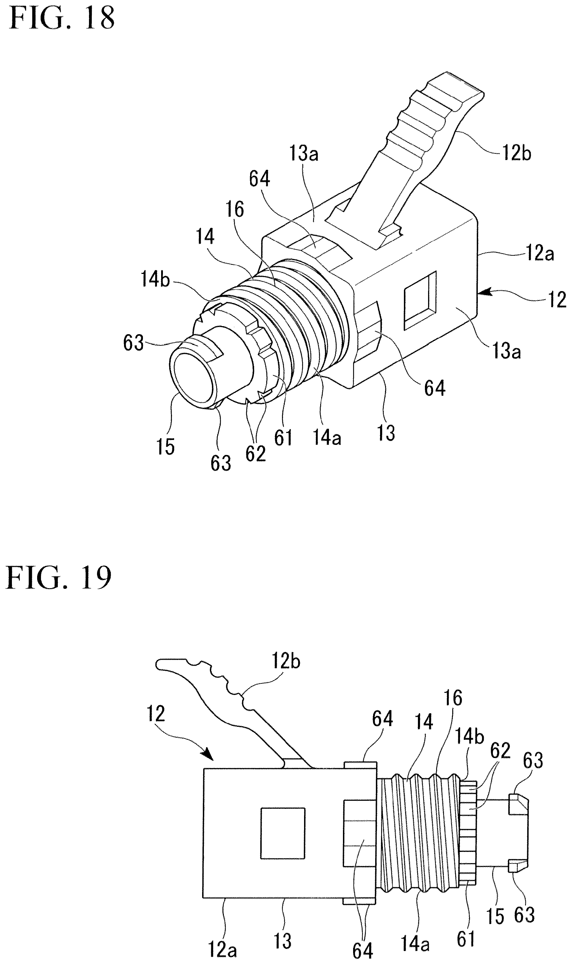

FIG. 18 is a perspective view of a stop ring that is used in an optical connector according to an embodiment of the present invention.
FIG. 19 is a side view of the stop ring shown in FIG. 18.

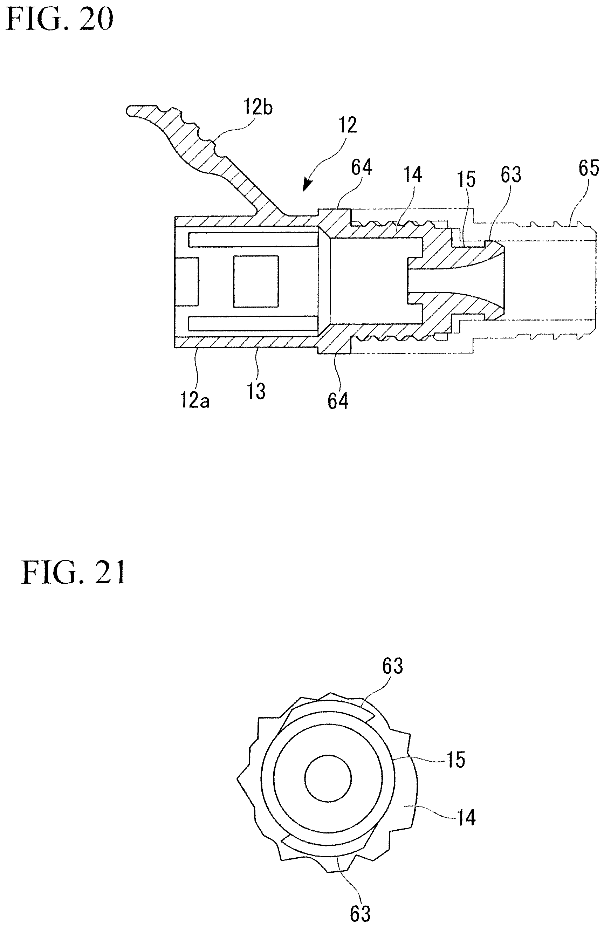

FIG. 20 is a sectional view of the stop ring shown in FIG. 18 and a fixing cap that is mounted on the stop ring.
FIG. 21 is a rear view of an extended cylindrical portion of the stop ring shown in FIG. 18.

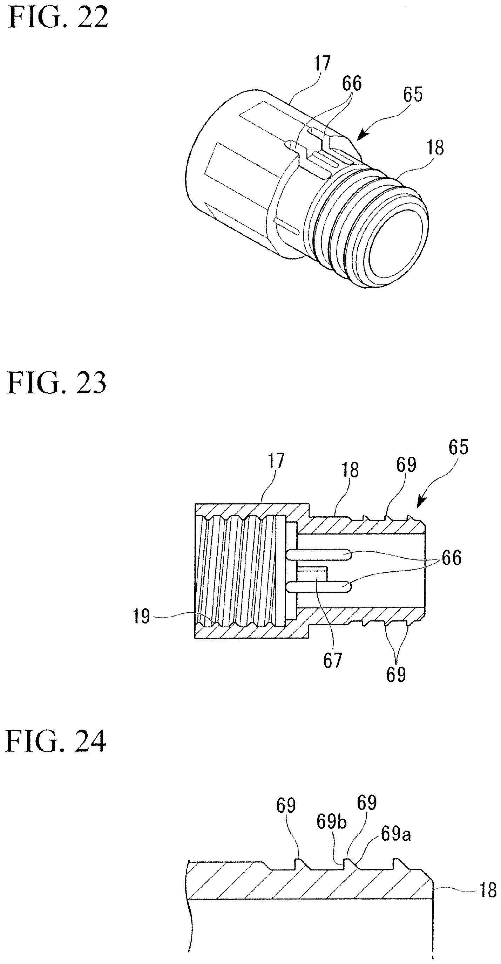

FIG. 22 is a perspective view of the fixing cap that is used in the optical connector according to another embodiment not in accordance with the claimed invention.
FIG. 23 is a sectional view of the fixing cap shown in FIG. 22.
FIG. 24 is a sectional view of main portions of the fixing cap shown in FIG. 22.

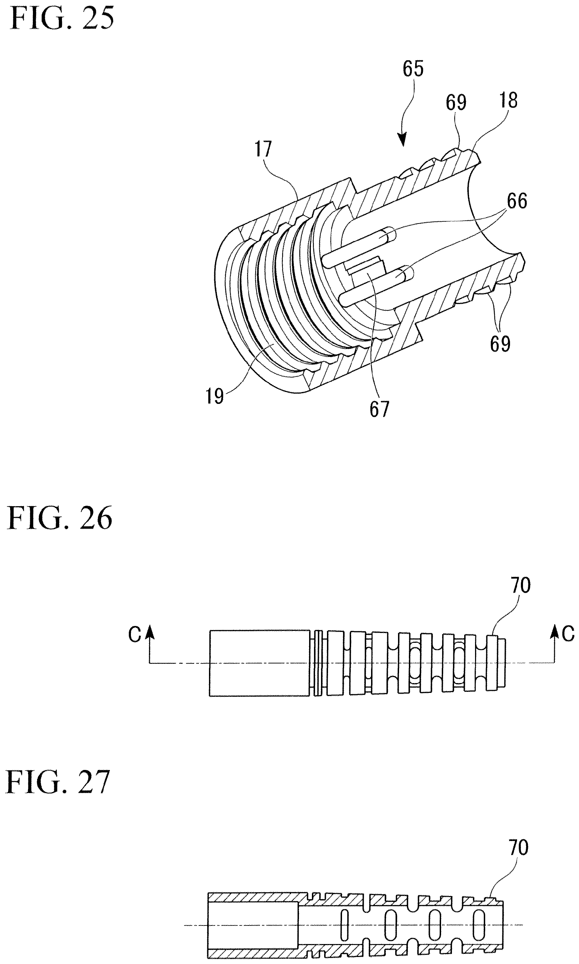

FIG. 25 is a perspective sectional view of the fixing cap shown in FIG. 22.
FIG. 26 is a side view of a boot that is used in the optical connector according to another embodiment of the present invention.
FIG. 27 is a sectional view of the boot shown in FIG. 26 and is a sectional view taken along a line C-C of FIG. 26.

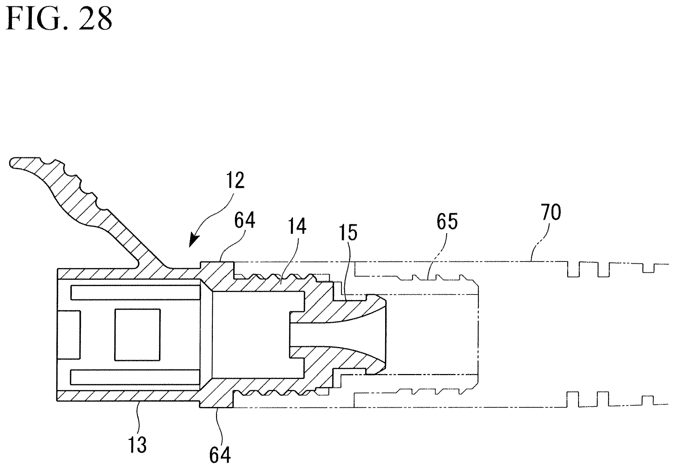

FIG. 28 is a side view of the stop ring, the fixing cap, and the boot of the optical connector according to another embodiment of the present invention.

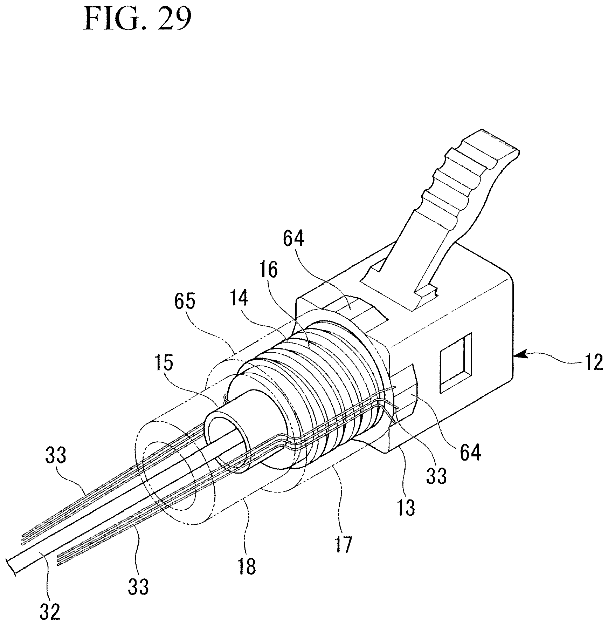

FIG. 29 is a schematic perspective view showing a state where tension bodies are fixed to the optical connector shown in the previous drawing.

### Description of Reference Numerals and Signs

- 1, 41: optical connector
- 2: housing
- 5, 42: fixing cap
- 6: retaining ring
- 14: fixing portion
- 15: extended cylindrical portion
- 16: screw portion
- 25: groove portion
- 31: optical fiber cable
- 32: optical fiber
- 33: tension body
- 34: jacket
- 43: protective tube
- 51: locking stepped portion
- 54: tube main body
- 55: flange portion (locking protrusion)

### Best Mode for Carrying out the Invention

A first embodiment will be described below with reference to the drawings.

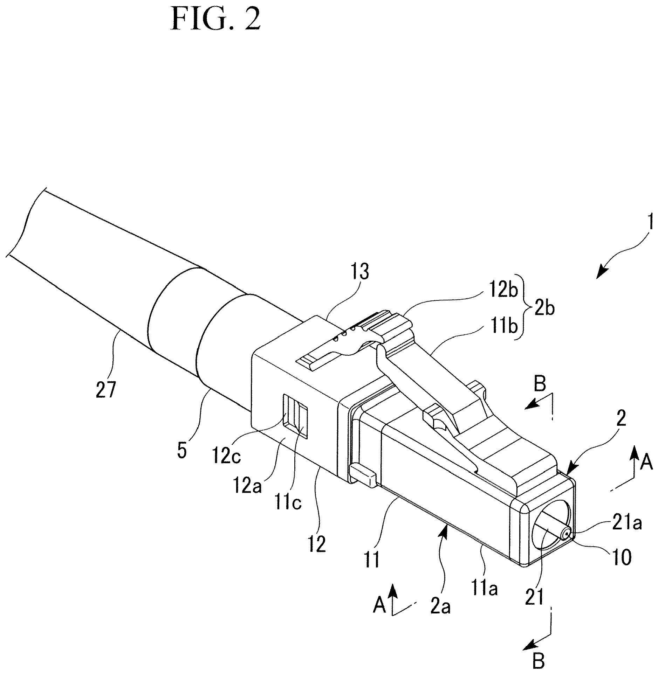

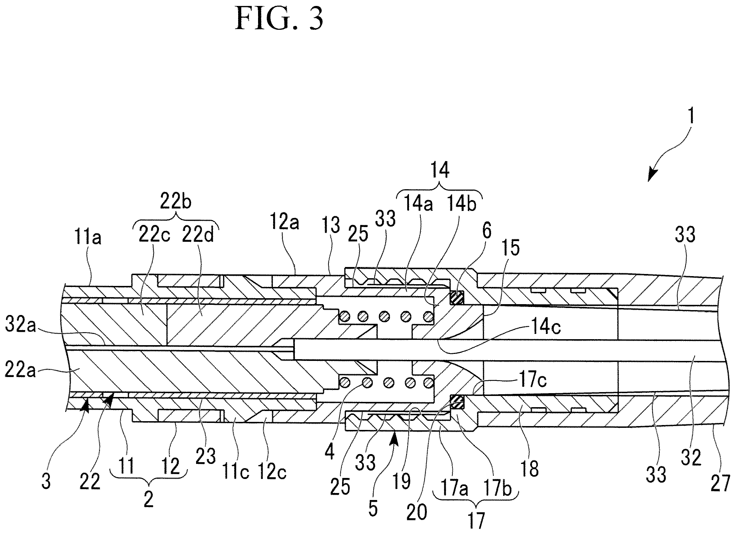

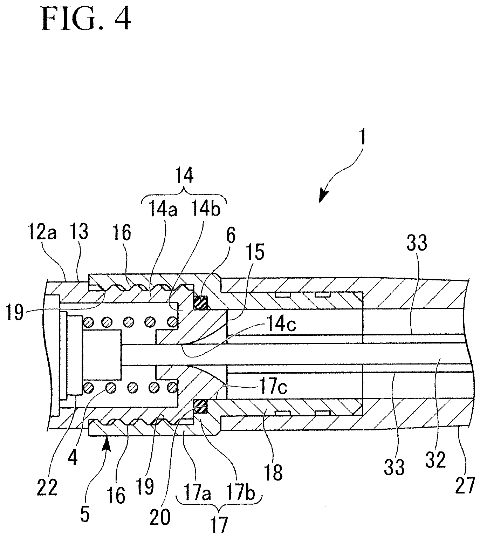

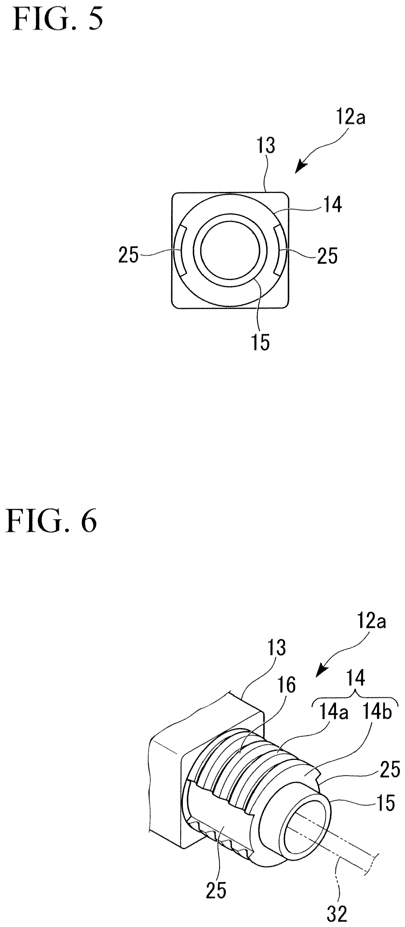

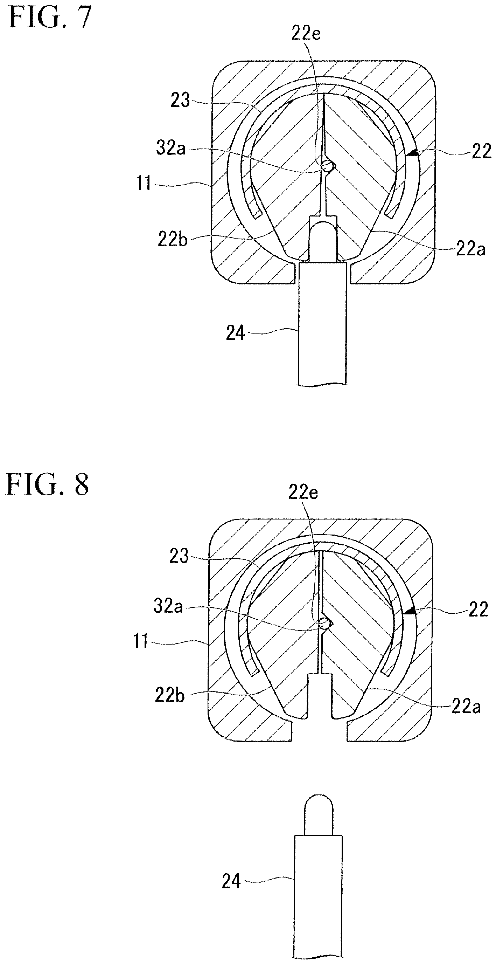

FIG. 1 is a sectional view of an optical connector 1 according to a first embodiment of the present invention. FIG. 1 is a sectional view taken along a line A-A of FIG. 2. FIG. 2 is a perspective view showing the appearance of the optical connector 1. FIG. 3 is an enlarged view of the main portions of the optical connector 1, and is a sectional view taken along the line A-A of FIG. 2. FIG. 4 is an enlarged view of the main portions of the optical connector 1, and is a sectional view taken along a line B-B of FIG. 2. FIG. 5 is a view of a stop ring main body 12a of the optical connector 1 as seen from the rear side. FIG. 6 is a perspective view of a fixing portion 14 of the stop ring main body 12a. FIGS. 7 and 8 are cross-sectional views of a plug frame 11 and a clamping portion 22.

As shown in FIGS. 1 and 2, the optical connector 1 is assembled to a terminal of an optical fiber cable 31.

An optical fiber cable (for example, an optical fiber cord) having a structure where an optical fiber 32 such as an optical fiber core and tension bodies 33 extending in the longitudinal direction of the optical fiber 32 are received in a jacket 34 made of a resin such as polyethylene may be exemplified as the optical fiber cable 31.

An aramid fiber may be preferably used as the tension body 33. However, a glass fiber, a carbon fiber, and the like may be used as the tension body.

In the following description, the left side in FIG. 1, that is, the direction in which the tip of the optical fiber cable 31 faces is referred to as the "front side", and the right side is referred to as the "rear side".

The optical connector 1 includes a housing 2, a ferrule 3 with a clamping portion that is provided in the housing 2, a spring 4 (pushing means) that pushes the ferrule 3 with a clamping portion to the front side, a fixing cap 5 that is mounted on the housing 2, and a retaining ring 6.

The housing 2 includes a sleeve-like plug frame 11 and a cap-like stop ring 12 that is fitted and fixed to the rear end of the plug frame 11.

Meanwhile, a body section (the housing 2, the ferrule 3 with a clamping portion, and the spring 4) on which the fixing cap 5 is mounted is referred to as a "connector body" in this embodiment.

As shown in FIG. 2, the plug frame 11 includes a sleeve-like frame body 11a and an elastic piece 11b that is inclined upward from the side surface of the front end portion of the frame body 11a toward the rear end of the frame body 11a.

The stop ring 12 includes a sleeve-like stop ring main body 12a and an elastic piece 12b that is inclined upward from a side portion of the stop ring main body 12a toward the plug frame 11 fitted to the stop ring main body 12a.

The frame body 11a and the stop ring main body 12a form a housing body 2a, and the elastic pieces 11b and 12b form a latch 2b.

The elastic pieces 11b and 12b are formed so that the protruding tips thereof overlap each other. Accordingly, when the elastic piece 12b is elastically deformed toward the housing body 2a, the elastic piece 11b of the plug frame 11 is pressed, so that the elastic piece 11b is elastically deformed toward the housing body 2a.

When a locking claw 11c formed at the frame body 11a is fitted into a locking window 12c of the stop ring main body 12a, the plug frame 11 and the stop ring 12 are assembled so as to be integrated into each other.

As shown in FIGS. 3 and 4, the stop ring main body 12a includes a prismatic base 13, a fixing portion 14 that extends rearward from the rear end portion of the base 13, and an extended cylindrical portion 15 that extends rearward from the rear end portion of the fixing portion 14.

The fixing portion 14 includes a cylindrical portion 14a, and an end wall portion 14b that extends inward from the rear end of the cylindrical portion 14a.

A screw portion 16 is formed on the outer peripheral surface of the cylindrical portion 14a (see FIG. 4).

The outer surface (rear surface) of the end wall portion 14b is formed substantially perpendicular to the insertion direction of the optical fiber (the forward-rearward direction). An insertion hole 14c into which the optical fiber 32 is inserted is formed at the end wall portion 14b.

The extended cylindrical portion 15 is formed in a cylindrical shape so that the extended cylindrical portion 15 is thinner than the fixing portion 14, that is, the outer diameter of the extended cylindrical portion 15 is smaller than that of the fixing portion 14. The optical fiber 32 can be inserted into the extended cylindrical portion.

As shown in FIGS. 3, 5, and 6, groove portions 25 without screw threads are formed on the outer peripheral surface of the fixing portion 14 in the insertion direction of the optical fiber (the forward-rearward direction).

The width of each of the groove portions 25 is formed so that the tension bodies 33 can be received in the groove portions. The groove portions 25 are formed over the entire length of the fixing portion 14. In the embodiment shown in the drawings, the groove portion 25 is formed to have a substantially fan-like cross-section, and has a constant depth in the longitudinal direction and in the circumferential direction.

In the embodiment shown in the drawings, two groove portions 25 are formed at positions that are rotationally symmetrical to each other with respect to the insertion direction of the optical fiber.

Since the groove portions 25 are formed at the positions rotationally symmetrical to each other, imbalance in the fixing strength between the tension bodies 33 and the housing 2 is hardly generated in the circumferential direction.

Meanwhile, the number of groove portions is not limited to the embodiment shown in the drawings, and may be one or three or more.

As shown in FIGS. 3 and 4, the fixing cap 5 includes a mounting portion 17 that is mounted on the fixing portion 14 and a cylindrical connecting portion 18 that extends rearward from the rear end portion of the mounting portion 17.

The mounting portion 17 includes a cylindrical portion 17a and an end wall portion 17b that extends inward from the rear end of the cylindrical portion 17a. An insertion hole 17c into which the optical fiber 32 is inserted is formed at the end wall portion 17b.

A screw portion 19, which is threadedly engaged with the screw portion 16 of the fixing portion 14, is formed on the inner surface of the cylindrical portion 17a.

An annular ring recess 20 in which the retaining ring 6 is disposed is formed on the inner surface (front surface) of the inner peripheral edge portion of the end wall portion 17b.

As shown in FIGS. 3 and 4, the fixing cap 5 clamps the tension bodies 33, which lead from the terminal of the optical fiber cable 31, between the stop ring main body 12a and itself and can screw and fix the tension bodies to the fixing portion 14.

That is, it may be possible to fix the fixing cap 5 to the fixing portion 14 by screwing and fitting the screw portion 19, which is formed on the inner surface of the cylindrical portion 17a, onto the screw portion 16 of the fixing portion 14.

The retaining ring 6 is to retain the tension bodies 33, which lead from the terminal of the optical fiber cable 31, on the housing 2. The retaining ring 6 is provided so as to surround the extended cylindrical portion 15, and is to retain the tension bodies 33 by clamping the tension bodies 33 between the extended cylindrical portion 15 and itself.

It is preferable that the retaining ring 6 be formed of an elastic body made of a resin or the like and retain the tension bodies 33 by clamping the tension bodies 33 between the extended cylindrical portion 15 and itself with the elastic force of the elastic body.

In the embodiment shown in the drawings, the retaining ring 6 is formed so as to have a circular cross-section, is disposed in the ring recess 20 of the fixing cap 5, and faces the outer surface of the end wall portion 14b of the fixing portion 14 and the outer surface of the extended cylindrical portion 15.

The retaining ring 6 may be adapted so as to clamp the tension bodies 33 between the end wall portion 14b and the extended cylindrical portion 15.

As shown in FIGS. 1, 7, and 8, the ferrule 3 with a clamping portion includes a ferrule 21 and a clamping portion 22 that is assembled on the rear end side of the ferrule 21 (on the side opposite to a connecting end surface 21a).

A built-in optical fiber 10 such as a bare optical fiber is inserted and fixed to the ferrule 21. The built-in optical fiber 10 is referred to as a ferrule-side optical fiber 10.

The ferrule-side optical fiber 10 protrudes from the rear end of the ferrule 21. A protrusion 10a, which is a protruding portion, is inserted between a pair of elements 22a and 22b of the clamping portion 22.

The clamping portion 22 has a structure where an extending portion 22a (hereinafter, referred to as an element 22a) extending from a flange portion 21b of the ferrule 21 and the element 22b facing the extending portion are received in a sleeve-like spring 23 having a C-shaped cross-section.

The element 22b is formed of two lid-side elements 22c and 22d that are lined up in the forward-rearward direction.

An alignment groove 22e, which positions the optical fiber 10 and the optical fiber 32, is formed at one or both of the elements 22a and 22b.

As shown in FIGS. 7 and 8, a wedge member 24 is inserted between the elements 22a and 22b so as to widen a gap between the pair of elements 22a and 22b of the clamping portion 22 against the elasticity of the spring 23. Accordingly, it may be possible to insert a tip portion 32a of the optical fiber 32 into the clamping portion 22.

The optical fiber 32 is pushed toward the ferrule 21, so that the optical fiber can be in contact with and connected to the ferrule-side optical fiber 10. Reference numeral 26 in FIG. 1 denotes a connection point between the protrusion 10a of the optical fiber 10 and the tip portion 32a of the optical fiber 32. A refractive index matching agent may be interposed between the end surfaces of the optical fiber 10 and the optical fiber 32.

Meanwhile, the clamping portion 22 having the structure where the elements 22a and 22b formed integrally with the flange portion 21b of the ferrule 21 are received in the spring 23 has been employed in the embodiment shown in the drawings. However, the connection structure of the optical fiber is not limited thereto. As long as the optical fiber can be mechanically positioned, abutted, and reliably connected, any other structure may be employed.

In the connection between the optical fiber 10 and the optical fiber 32, PC contact (physical contact) may be employed without using a refractive index matching agent. In this case, it is preferable that the connecting end surface of the optical fiber 10 have the shape of a curved and convex surface. Further, it is preferable that the optical fiber 32 be pushed toward the optical fiber 10 so as to be in contact with the optical fiber 10 with a predetermined pressure.

As shown in FIG. 3, the spring 4 is provided in the stop ring 12, receives a reaction force from the end wall portion 14b of the fixing portion 14, and pushes the ferrule 3 with a clamping portion to the front side. The spring 4 is, for example, a coil spring.

As shown in FIG. 1, a boot 27 can be mounted on the cylindrical connecting portion 18 of the fixing cap 5. Reference numeral 28 denotes a protective tube that is made of a resin or the like.

Here, a so-called LC-type optical connector is exemplified as the optical connector 1. The optical connector 1 is not limited to the LC-type optical connector, and may be an optical connector such as a SC2-type optical connector. The SC2-type optical connector is an optical connector obtained by removing a knob, which is mounted on the housing of a SC-type optical connector, from the SC-type optical connector (SC: Single fiber coupling optical fiber connector. An F04-type optical connector (optical connector plug) or the like is defined by JIS C 5973).

A method of assembling the optical connector 1 to the terminal of the optical fiber cable 31 will be described next.

As shown in FIGS. 1, 7, and 8, the optical fiber 32 is exposed from the terminal of the optical fiber cable 31, the tension bodies 33 are led, and a sheath of the tip portion of the optical fiber 32 is removed. The tip portion 32a is, for example, a bare optical fiber.

The tip portion 32a of the optical fiber 32 is inserted into the gap between the elements 22a and 22b widened by the wedge member 24, so that the tip portion 32a of the optical fiber 32 is in contact with and connected to the protrusion 10a of the ferrule-side optical fiber 10.

Meanwhile, the optical fiber cable 31 is inserted into the retaining ring 6, the fixing cap 5, the boot 27, and the protective tube 28 in advance.

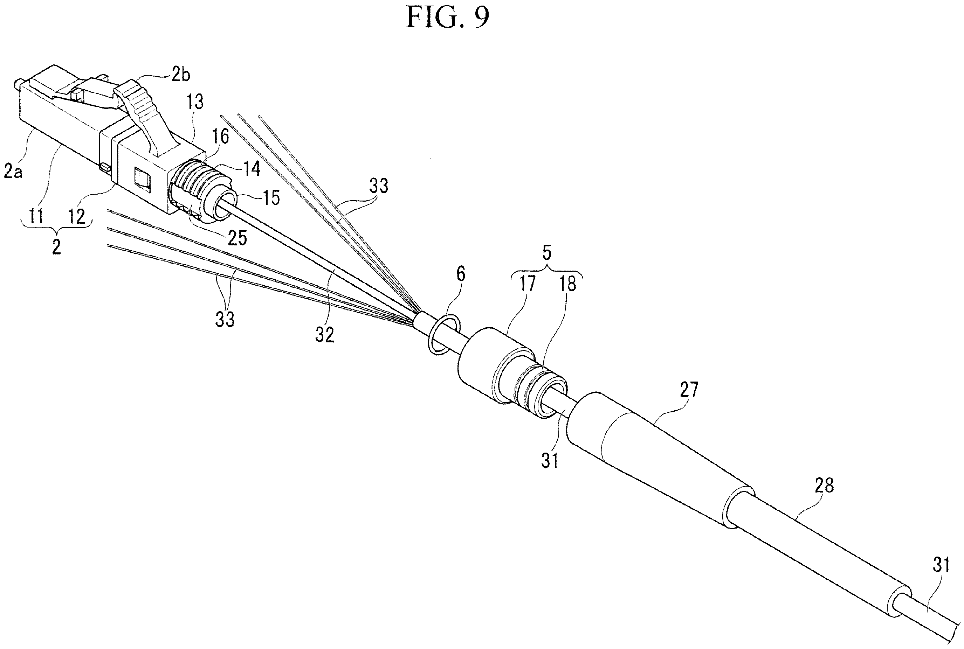

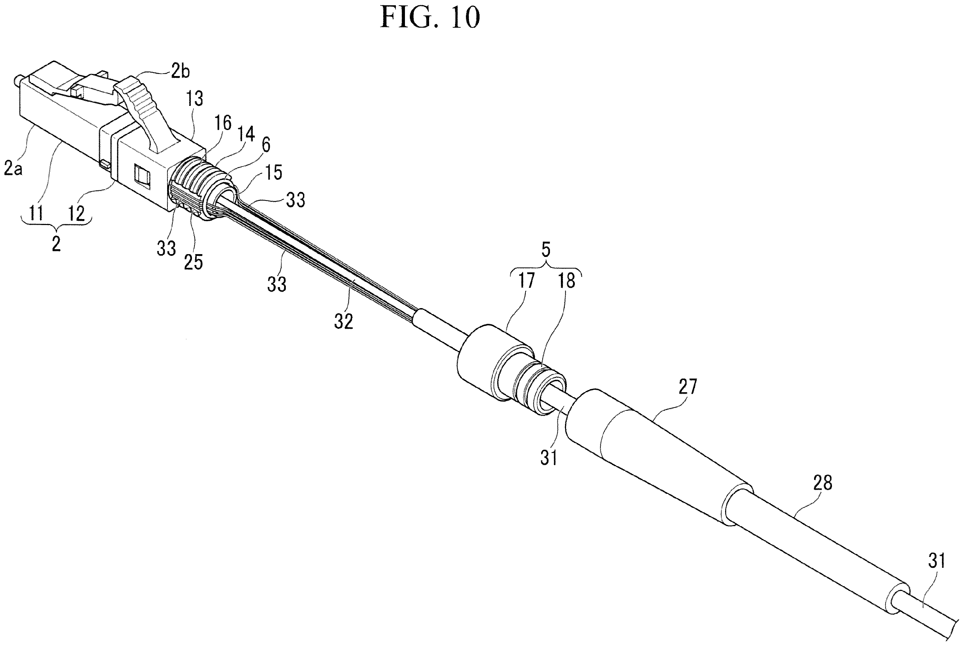

As shown in FIGS. 9 and 10, the tension bodies 33 are tied in two bundles and the tip portions of the bundles are disposed in the groove portions 25 of the fixing portion 14.

If the retaining ring 6 is mounted on the extended cylindrical portion 15 in this state, the tension bodies 33 are interposed and retained between the retaining ring 6 and the extended cylindrical portion 15.

After that, the mounting portion 17 of the fixing cap 5 is rotated in a fastening direction and is screwed to the fixing portion 14.

The tension bodies 33 are interposed and fixed between the fixing cap 5 and the housing 2.

Positions where the tension bodies 33 are interposed are, for example, positions between the end wall portion 17b of the fixing cap 5 and the end wall portion 14b of the fixing portion 14 or positions between the retaining ring 6 and the end wall portion 14b.

During the screwing, the fixing cap 5 is rotated in the circumferential direction. However, since the tension bodies 33 are positioned in the groove portions 25 and retained by the retaining ring 6, the tension bodies 33 are not moved as the fixing cap 5 is moved. For this reason, it may be possible to reliably fix the tension bodies 33 to the housing 2.

If the tension bodies 33 are insufficiently fixed by an incorrect operation or the like, it may be possible to mount the fixing cap 5 again after separating the fixing cap 5 by rotating the fixing cap 5 in a release direction (in a direction opposite to the fastening direction).

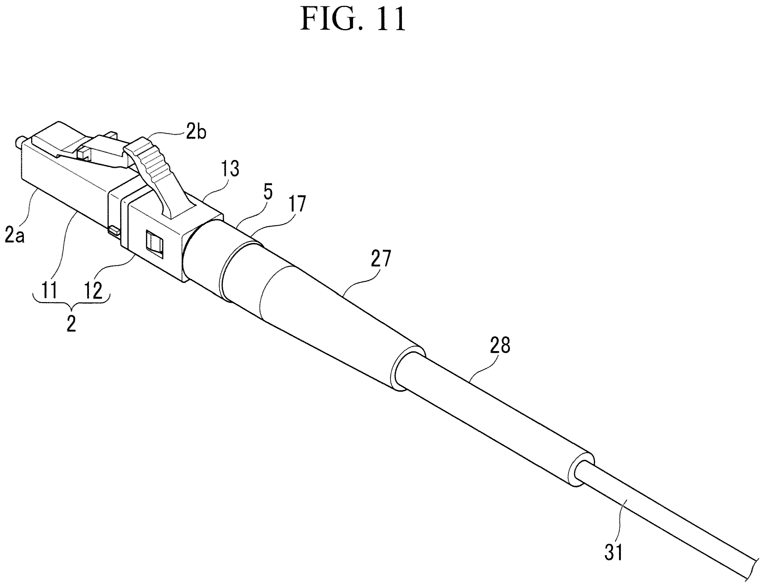

The boot 27 is mounted on the cylindrical connecting portion 18 of the fixing cap 5 and the protective tube 28 is disposed at a predetermined position as shown in FIG. 11, so that the assembly of the optical connector 1 is completed.

The optical connector 1 has a structure where the fixing cap 5 is screwed to the fixing portion 14 so as to fix the tension bodies 33. A dedicated tool is needed in a general-purpose caulking fixing structure. However, since screwing has been employed in the optical connector 1, a dedicated tool is not needed. Therefore, the optical connector is easily assembled.

Further, since screwing is employed, it may be possible to firmly fix the tension bodies 33 to the housing 2 and provide sufficient strength to a connection portion connected to the optical fiber cable 31.

Furthermore, since the number of parts of a fixing structure is small in the optical connector 1 and the structure of the optical connector is simple, it may be possible to reduce the number of assembling processes. Since the structure of the optical connector is simple, it may be possible to reduce the size of the optical connector 1, that is, to reduce the entire length of the optical connector.

In the general-purpose caulking fixing structure, it is difficult to detach a caulking member that has been fixed once. Accordingly, if the tension bodies are insufficiently fixed due to an incorrect operation or the like, an operation for fixing a caulking member to a new terminal needs to be performed after the removal of a portion of the optical fiber where the caulking member is fixed.

In contrast, screwing is employed in the optical connector 1. Accordingly, if the tension bodies 33 are insufficiently fixed due to an incorrect operation or the like, it may be possible to mount the fixing cap 5 again after removing the fixing cap 5. Therefore, the yield of the assembling of the optical connector 1 becomes high.

Meanwhile, the Kevlar fixing structure of the end portion of the optical connector is not limited to a site assembly-type optical connector and may be applied to other-types of optical connectors.

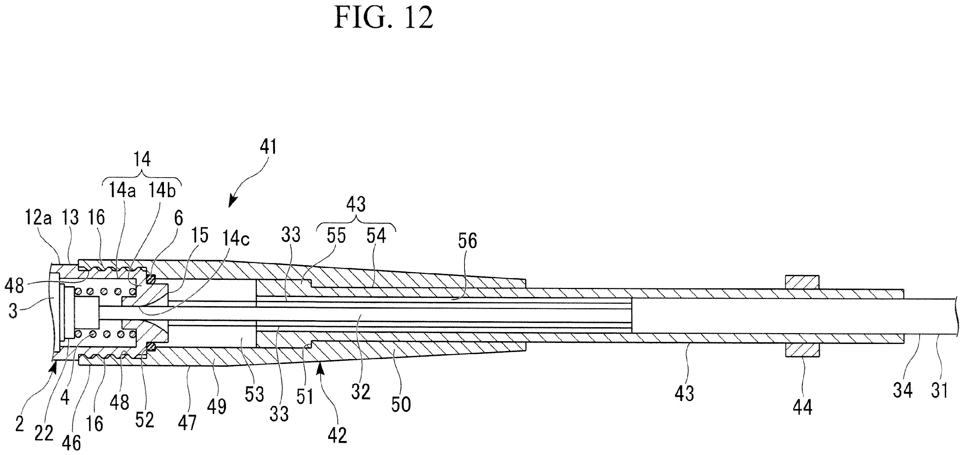

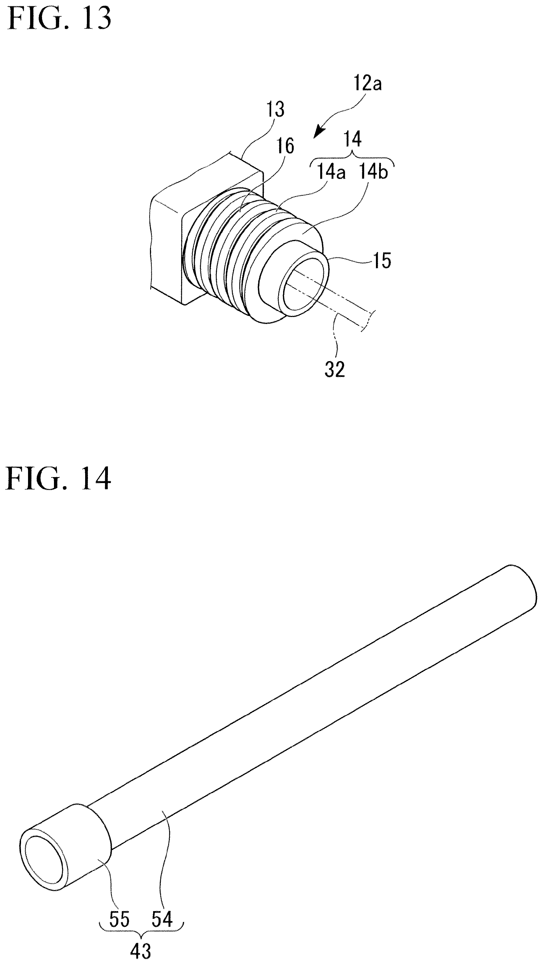

FIG. 12 is a sectional view of an optical connector 41 according to a second embodiment. FIG. 13 is a perspective view of a fixing portion 14 of the optical connector 41. FIG. 14 is a perspective view of a protective tube 43 of the optical connector 41.

In the following description, the components described above will be denoted by the same reference numerals and the description thereof will be omitted.

As shown in FIG. 12, an optical connector 41 includes a housing 2, a ferrule 3 with a clamping portion that is provided in the housing 2, a spring 4 that pushes the ferrule 3 with a clamping portion to the front side, a fixing cap 42 that is mounted on the housing 2, a retaining ring 6, a protective tube 43, and a retaining tool 44 that retains the protective tube 43 on the optical fiber cable 31.

As shown in FIG. 13, groove portions are not formed on the fixing portion 14 of the optical connector 41 and a screw portion 16 is formed over the entire circumference of the fixing portion 14 unlike in the optical connector 1 shown in FIG. 6.

As shown in FIG. 12, the fixing cap 42 is made of a resin or the like and includes a mounting portion 46 that is fixed to the fixing portion 14 and a cylindrical connecting portion 47 that is connected to the rear end of the mounting portion 46.

The mounting portion 46 is formed in a cylindrical shape, and a screw portion 48, which is threadedly engaged with the screw portion 16 of the fixing portion 14, is formed on the inner surface of the mounting portion.

The cylindrical connecting portion 47 is formed in the shape of a cylinder that includes a large-diameter portion 49 having a substantially constant inner diameter and a small-diameter portion 50 formed so as to extend rearward from the rear end of the large-diameter portion 49.

The inner diameter of the small-diameter portion 50 is smaller than that of the large-diameter portion 49, and a locking stepped portion 51, which forms the surface perpendicular to the axial direction, is formed at a boundary between the large-diameter portion 49 and the small-diameter portion 50.

An annular ring recess 52 in which the retaining ring 6 is disposed is formed on the inner surface of the front end portion of the cylindrical connecting portion 47.

The inner portion of the cylindrical connecting portion 47 forms an optical fiber insertion portion 53 into which the optical fiber 32 is inserted.

The rear portion of the cylindrical connecting portion 47 is formed so that the outer diameter and the thickness of the rear portion of the cylindrical connecting portion are decreased toward the rear end. Accordingly, it is easier to bend the cylindrical connecting portion at a position closer to the rear end. Meanwhile, slits (not shown) may be formed at the tapered portion 50 in the circumferential direction in order to improve flexibility.

It is preferable that the fixing cap 42 be made of a flexible material such as rubber.

As shown in FIGS. 12 and 14, the protective tube 43 is integrally made of a resin such as polyester elastomer. The protective tube 43 includes a tube main body 54 that is formed in a cylindrical shape and a flange portion 55 (locking protrusion) that is formed at the front end of the tube main body 54.

The outer diameter of the tube main body 54 may be substantially equal to or slightly smaller than the inner diameter of the small-diameter portion 50. The tube main body 54 is inserted into the small-diameter portion 50 and extends rearward from the rear end of the fixing cap 42.

The flange portion 55 is to prevent the protective tube 43 from being separated from the fixing cap 42 toward the rear side, and is an annular protrusion that protrudes outward from the outer surface of the tube main body 54. The outer diameter of the flange portion 55 is larger than the inner diameter of the small-diameter portion 50 at the very least. The outer diameter of the flange portion 55 may be substantially equal to or slightly smaller than the inner diameter of the large-diameter portion 49 at the very least.

The tube main body 54 is inserted into the small-diameter portion 50 of the fixing cap 42 and the flange portion 55 is positioned in the large-diameter portion 49. Accordingly, when a force is applied to the protective tube 43 toward the rear side, the rear end surface of the flange portion 55 comes into contact with the locking stepped portion 51, so that the rearward movement of the flange portion beyond the locking stepped portion is restricted.

The inner portion of the protective tube 43 forms an optical fiber insertion portion 56 into which the optical fiber 32 is inserted.

The protective tube 43 is not fixed to the fixing cap 42. For this reason, when the fixing cap 42 is screwed to the fixing portion 14, torque is not applied to the protective tube 43.

Meanwhile, a position where the flange portion 55 is formed is not limited to the end portion of the tube main body 54, and may be an intermediate position between both end portions of the tube main body 54. Further, as long as the locking protrusion of the present invention is locked to the locking stepped portion of the fixing cap and prevents the rearward movement of the flange portion, the locking protrusion may have any other structure. The flange portion is not limited to the shape shown in the drawings, and may be, for example, a protrusion that is discontinuous in the circumferential direction.

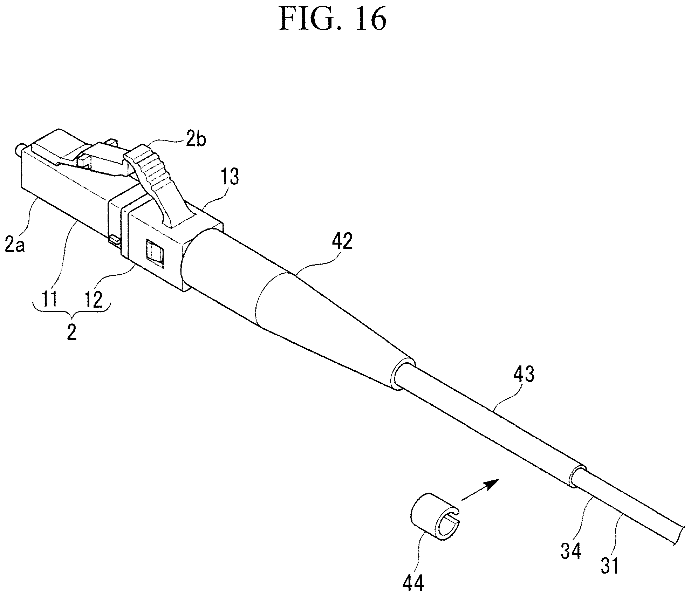

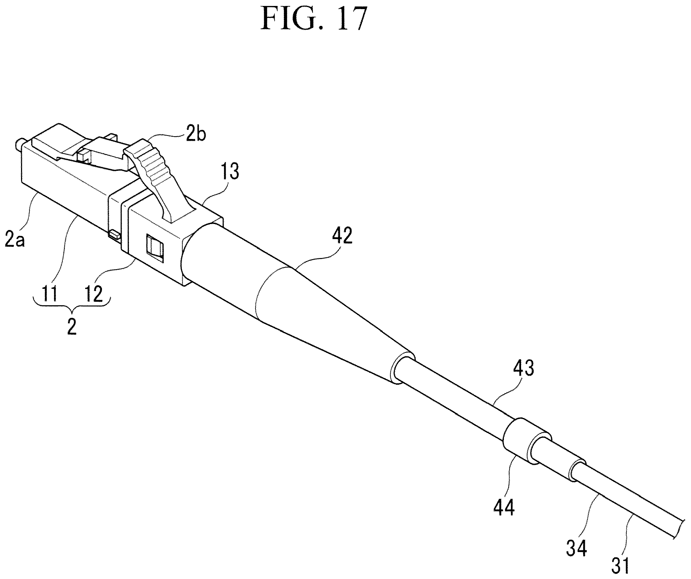

As shown in FIG. 12, the retaining tool 44 is formed so as to have a C-shape cross-section, and fixes the protective tube 43 to the jacket 34 of the optical fiber cable 31 by pressing the protective tube 43 by the elastic force (clamping force) of the retaining tool 44 (see FIGS. 16 and 17).

A method of assembling the optical connector 41 to the terminal of the optical fiber cable 31 will be described next.

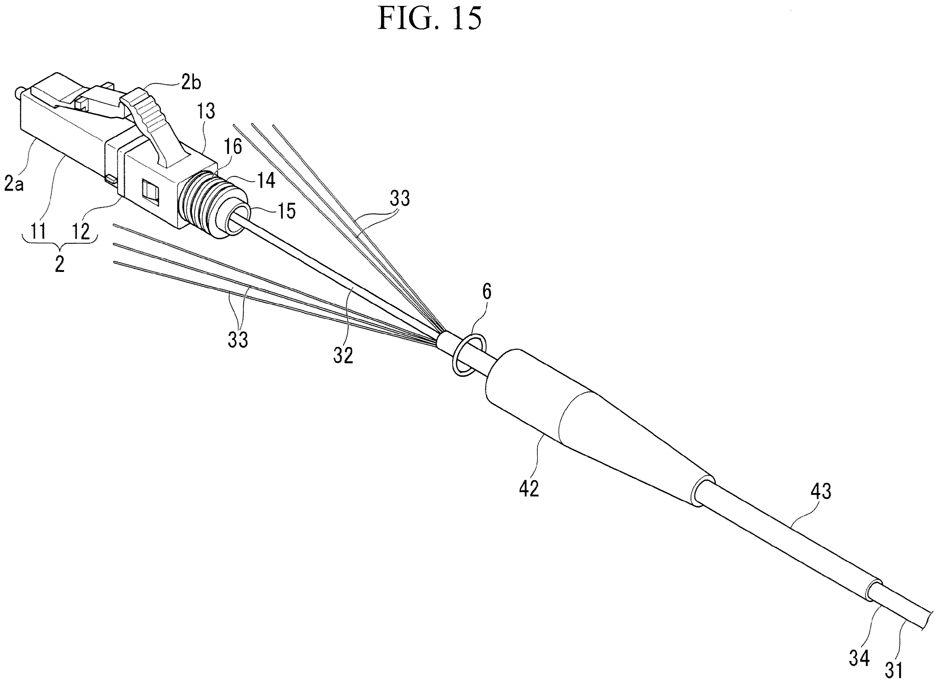

As shown in FIGS. 15 and 16, the tension bodies 33 are retained on the extended cylindrical portion 15 by the retaining ring 6. Then, the fixing cap 42 is screwed to the fixing portion 14. Accordingly, the tension bodies 33 are interposed and fixed between the fixing cap 42 and the fixing portion 14.

After that, the retaining tool 44 is mounted on the outer peripheral surface of the protective tube 43 as shown in FIG. 17, so that the protective tube 43 is fixed to the jacket 34 of the optical fiber cable 31.

The optical connector 41 has the structure where the tension body 33 is fixed by the screwing of the fixing cap 42 to the fixing portion 14. Accordingly, it is easy to assemble the optical connector 41 and it may be possible to firmly fix the tension bodies 33 to the housing 2 and to provide sufficient strength to the connection portion.

Further, since the screw portion 16 is formed over the entire circumference of the fixing portion 14, it may be possible to reliably interpose the tension bodies 33 between the fixing cap 42 and the fixing portion 14 that are screwed and fitted to each other. Accordingly, it may be possible to increase the fixing strength of the tension bodies 33.

In general, a jacket of an optical fiber cable contracts in the longitudinal direction due to the variation in temperature or the like.

In contrast, the protective tube 43 including the flange portion 55 is fixed to the jacket 34 in the optical connector 41. Accordingly, when a force is applied to the protective tube 43 toward the rear side due to the contraction of the jacket 34, the flange portion 55 comes into contact with the locking stepped portion 51 of the fixing cap 42, so that the rearward movement of the flange portion beyond the fixing cap is restricted.

Therefore, even when the jacket 34 contracts due to variations in temperature or the like, it may be possible to prevent the jacket 34 from being separated from the optical connector 41 toward the rear side.

FIGS. 18 to 28 are views showing an optical connector according to an embodiment, FIGS 18-21 and 28-29 coresponding to the claimed invention.

As shown in FIGS. 18 to 21, an annular protrusion 61 along the circumferential direction of the end wall portion 14b is formed on the rear surface of an end wall portion 14b of a stop ring main body 12a, and a plurality of movement preventing recesses 62, which prevents the movement of the tension bodies 33 in the circumferential direction, is formed on the outer peripheral surface of the annular protrusion 61.

A rising convex portion 63 is formed in the circumferential direction at a part of the outer peripheral surface of a tip portion of an extended cylindrical portion 15. A plurality of rising convex portions 63 may be formed at intervals in the circumferential direction.

Swollen convex portions 64 are formed at the rear end portions of the side surfaces 13a of a base 13. The swollen convex portions 64 increase the area of the portions of the base 13 facing a fixing cap 65 and increase the fixing strength of the tension bodies 33 that are interposed between the base and the fixing cap.

As shown in FIGS. 22 to 25, the fixing cap 65 includes a mounting portion 17 that is mounted on the fixing portion 14 and a cylindrical connecting portion 18 that extends rearward from the rear end portion of the mounting portion 17.

A pair of slits 66 is formed at the fixing cap 65 in the axial direction (the forward-rearward direction). The pair of slits 66 is formed at positions, which are close to each other in the circumferential direction with a gap interposed therebetween, from the rear portion of the mounting portion 17 over the front portion of the cylindrical connecting portion 18.

A screw portion 19, which is threadedly engaged with the screw portion 16 of the fixing portion 14, is formed on the inner peripheral surface of the mounting portion 17.

As shown in FIGS. 23 and 25, an operational convex portion 67 for providing an operational feeling (click feeling) to a user is formed on the inner surface of the cylindrical connecting portion 18. The operational convex portion 67 is formed at a position that reaches the rising convex portion 63 while the fixing cap 65 is screwed onto the fixing portion 14.

The operational convex portion 67 is formed at the position between the slits 66 and 66. Since a portion between the slits 66 and 66 can be elastically bent outward when the operational convex portion 67 runs on the rising convex portion 63, the screwing of the fixing cap 65 is not hindered.

Meanwhile, the slits 66 and the operational convex portion 67 may not be formed at the fixing cap 65.

As shown in FIGS. 23 and 24, separation preventing protrusions 69 are formed on the outer peripheral surface of the cylindrical connecting portion 18. The separation preventing protrusion 69 is to prevent the separation of a boot 70 and is an annular protrusion that is formed in the circumferential direction of the cylindrical connecting portion 18.

The rear surface 69a of the separation preventing protrusion 69 is inclined so that the diameter of the separation preventing protrusion is decreased toward the rear side.

It is preferable that the inclination angle of the rear surface 69a (the inclination angle with respect to the axial direction of the cylindrical connecting portion 18) be smaller than that of the front surface 69b. In the embodiment shown in the drawings, the separation preventing protrusion 69 is formed so as to have a substantially trapezoidal cross-section and the front surface 69b is substantially perpendicular to the axial direction.

As shown in FIGS. 26 to 28, the boot 70 made of a relatively soft resin or the like is locked to the separation preventing protrusions 69. Accordingly, even though a pulling force is applied to the boot toward the rear side, the boot is not separated from the cylindrical connecting portion 18.

As shown in FIGS. 28 and 29, the mounting portion 17 of the fixing cap 65 is screwed onto the fixing portion 14 for the assembly of the optical connector. In this case, the tension bodies 33 are disposed on the outer periphery of the fixing portion 14 and are interposed between the fixing cap 65 and the fixing portion 14 by the screwing of the fixing cap 65 (see FIG. 15).

It is preferable that the tension bodies 33 be interposed between the fixing cap 65 and the fixing portion 14 while being aggregated in the shape of a bundle as shown in FIG. 29. The tension bodies 33 may be divided into a plurality of bundle-like aggregates and fixed to the positions distant from each other in the circumferential direction of the fixing cap 65 and the fixing portion 14. In the embodiment shown in the drawings, the tension bodies 33 have been divided into two aggregates and tied in two bundles, and the bundles have been fixed at positions that are rotationally symmetrical to each other with respect to the axis of the fixing portion 14 and the fixing cap 65. However, the tension bodies 33 are not limited to two aggregates and may be divided into three or more aggregates. It is preferable that the tension bodies 33 be interposed between the base 13 of the stop ring main body 12a and the front end surface of the fixing cap 65.

If the tension bodies 33 are aggregated in the shape of a bundle, the diameter (the diameter of the aggregate) is increased. Accordingly, the tension bodies are interposed between the base 13 of the stop ring main body 12a and the front end surface of the fixing cap 65 with a strong force, so that it may be possible to increase the fixing strength of the tension bodies 33.

Further, it may be possible to reduce the imbalance of forces, which are applied to the stop ring main body 12a and the fixing cap 65 by the tension bodies 33, by fixing the plurality of aggregates at positions that are distant from each other in the circumferential direction.

Meanwhile, tension applied to the tension bodies is shared and received between the fixing cap 65 and the fixing portion 14 (the screw portion 16) and between the peripheral end surface of the fixing cap 65 and the base 13.

Since the swollen convex portions 64 are formed at the base 13 of the stop ring main body 12a, the area of the portions of the base facing the fixing cap 65 is increased. Accordingly, it may be possible to increase the fixing strength of the tension bodies 33 that are interposed between the base and the fixing cap.

During the screwing, the operational convex portion 67 runs on the rising convex portion 63 by the rotation of the fixing cap 65 (see FIGS. 18 and 25) and reaches the position, where the rising convex portion 63 is not formed, by the further rotation of the fixing cap. Since an operational feeling (click feeling) is provided to a user that operates the fixing cap 65 when the operational convex portion 67 falls from the rising convex portion 63, a user can easily confirm the amount the fixing cap 65 was screwed on..

A method of making an optical fiber be abutted and connected to an optical fiber between the pair of elements of the clamping portion (a mechanical splicing method) has been employed in the embodiment shown in the drawings. However, other methods may be employed in the connection of an optical fiber in the present invention. For example, a built-in optical fiber and an optical fiber exposed to a terminal of an optical fiber cable may be fusion-spliced to each other. In this case, a fusion-spliced portion may be reinforced by a reinforcing sleeve and received in the housing.

Further, in the embodiment shown in the drawings, the built-in optical fiber and the optical fiber of the optical fiber cable have been connected to each other inside the optical connector. However, the present invention may be applied to an optical connector having a structure without the built-in optical fiber, that is, a structure where the tip of the optical fiber exposed to the terminal of the optical fiber cable is exposed to the connecting end surface as it is.

Furthermore, the housing 2 has included the elastic pieces 11b and 12b as shown in FIG. 2. However, the housing is not limited thereto, and a housing without elastic pieces may be employed.

### Industrial Applicability

According to the present invention, it is possible to provide a site assembly-type optical connector that can be assembled without using a dedicated tool in a site other than a factory, and a method of assembling the optical connector.

## Claims

1. An optical connector (1) that is assembled onto a terminal of an optical fiber cable (31) where an optical fiber (32) and tension bodies (33) extending in a longitudinal direction of the optical fiber are integrated, the optical connector comprising:
a ferrule (21) to which a built-in optical fiber (10) is inserted and fixed;
a housing (2) that receives the ferrule (21) and the built-in optical fiber (10) movably in the longitudinal direction; and
a fixing cap (65) that is mounted on the housing (2),
wherein the housing (2) includes a plug frame (11), and a stop ring (12) configured to be fitted and fixed to a rear end of the plug frame (11), wherein
the stop ring (12) includes a base (13), and a fixing portion (14), wherein
the fixing portion (14) extends rearward from a rear end portion of the base (13) and having an outer peripheral surface provided with a screw portion (16),
wherein the tension bodies (33) leading from the terminal of the optical fiber cable (31) are interposed between the housing (2) and the fixing cap (65), and the fixing cap (65) is configured to be screwed onto and fixed to the fixing portion (14), and
wherein the base (13) includes swollen convex portions (64) formed at a rear end portion of side surfaces (13a) of the base (13), the swollen convex portions (64) protrude outward from the side surfaces (13a) of the base (13) and increase the area of the portions of the base (13) facing the fixing cap (65), and the tension bodies (33) are interposed between the swollen convex portions (64) and a front end surface of the fixing cap (65) for increasing the fixing strength of the tension bodies (33) that are interposed between the base (13) and the fixing cap (65).

2. The optical connector according to claim 1, wherein the stop ring (12) includes an extended cylindrical portion (15) that is thinner than the fixing portion and extends rearward from the fixing portion (14), and the extended cylindrical portion (15) comprises a plurality of rising convex portions (63) formed in a circumferential direction.

3. The optical connector according to claim 2, wherein the fixing cap (65) comprises a mounting portion (17) that is mounted on the fixing portion (14) and a cylindrical connecting portion (18) extending rearward from a rear end portion of the mounting portion (17), an operational convex portion (67) being formed on the inner surface of the cylindrical connecting portion (18) at a position that reaches the plurality of rising convex portion (63) while the fixing cap (65) is screwed on the fixing portion (14).

4. The optical connector according to any one of claims 1 to 3,
wherein a protective tube (43) covers a jacket (34) of the optical fiber cable and the optical fiber (31),
wherein the protective tube (43) includes a cylindrical tube main body (54) and a locking protrusion (55) that extends outward from the tube main body (54), and
wherein the locking protrusion (55) is formed so as to be locked to a locking stepped portion (51) formed on an inner surface of the fixing cap (42) and prevent a rearward movement of the protective tube (43).

5. The optical connector according to claim 1,
wherein the stop ring (12) further includes an extended cylindrical portion (15) that extends rearward from the rear end portion of the fixing portion (14), the extended cylindrical portion (15) being formed in a cylindrical shape so that an outer diameter of the extended cylindrical portion (15) is smaller than that of the fixing portion (14),
wherein the fixing portion includes a first cylindrical portion (14a), and a first end wall portion (14b) that extends inward from a rear end of the first cylindrical portion, and the fixing cap (65) includes a second cylindrical portion (17a) and a second end wall portion (17b) that extends inward from a rear end of the second cylindrical portion (17a), and
wherein the tension bodies are interposed between the first end wall portion (14b) and the second end wall portion (17b).

6. The optical connector according to any one of claims 1 to 5,
wherein an annular protrusion (61) is formed on the stop ring (12) and a plurality of movement preventing recesses (62) formed on an outer peripheral surface of the annular protrusion (61) are adapted to prevent the movement of the tension bodies (33) in the circumferential direction.

7. A method of assembling an optical connector (1) onto a terminal of an optical fiber cable (31) where an optical fiber (31) and tension bodies (33) extending in a longitudinal direction of the optical fiber are integrated,
wherein the optical connector includes a ferrule (21) to which a built-in optical fiber (10) is inserted and fixed, a housing (2) that receives the ferrule (21) and the built-in optical fiber (10) movably in a longitudinal direction, and a fixing cap (65) that is mounted on the housing (2),
wherein the housing (2) includes a plug frame (11), and a stop ring (12) configured to be fitted and fixed to a rear end of the plug frame (11), wherein
the stop ring (12) includes a base (13) and a fixing portion (14), wherein
a fixing portion (14) extends rearward form a rear end portion of the base (13) and having an outer peripheral surface is provided with a screw portion (16),
wherein the fixing cap (65) is screwed and fixed to the fixing portion (14),
wherein the optical fiber exposed to the terminal of the optical fiber cable is abutted and connected to the built-in optical fiber (10) inserted into the ferrule (21),
wherein while the tension bodies (33) leading from the terminal of the optical fiber cable (31) are interposed between the housing (2) and the fixing cap (65), the fixing cap (65) is screwed and fixed to the fixing portion (14) after the connecting of the optical fiber (32), and
wherein the base (13) includes swollen convex portions (64) formed at a rear end portion of the side surfaces (13a) of the base (13), the swollen convex portions (64) protrude outward from the side surface of the base (13) and increase the area of the portions of the base (13) facing the fixing cap (65), and the tension bodies (33) are interposed between the swollen convex portions (64) and a front end surface of the fixing cap (65) for increasing the fixing strength of the tension bodies (33) that are interposed between the base (13) and the fixing cap (65).

8. The method according to claim 7,
wherein the fixing portion includes a first cylindrical portion (14a), and a first end wall portion (14b) that extends inward from a rear end of the first cylindrical portion, and the fixing cap includes a second cylindrical portion (17a) and a second end wall portion (17b) that extends inward from a rear end of the second cylindrical portion, and
wherein the tension bodies (33) are interposed between the first end wall portion and the second end wall portion.

9. The method according to any one of claims 7 and 8,
wherein an annular protrusion (61) is formed on the stop ring (12) and a plurality of movement preventing recesses (62) formed on an outer peripheral surface of the annular protrusion (61) are adapted to prevent the movement of the tension bodies (33) in the circumferential direction.

## Patentansprüche

1. Optischer Steckverbinder (1), der an einen Anschluss eines optischen Faserkabels (31) montiert ist, in dem eine optische Faser (32) und Spannkörper (33), die sich in einer Längsrichtung der optischen Faser erstrecken, integriert sind, wobei der optische Steckverbinder aufweist:
eine Hülse (21), an die eine eingebaute optische Faser (10) eingesetzt und befestigt ist;
ein Gehäuse (2), das die Hülse (21) und die eingebaute optische Faser (10) in Längsrichtung beweglich aufnimmt; und
eine Befestigungskappe (65), die an dem Gehäuse (2) montiert ist,
wobei das Gehäuse (2) einen Steckerrahmen (11) und einen Anschlagring (12), der dazu konfiguriert ist, an einem hinteren Ende des Steckerrahmens (11) angepasst und befestigt zu werden, aufweist, wobei
der Anschlagring (12) eine Basis (13) und einen Befestigungsabschnitt (14) aufweist, wobei
der Befestigungsabschnitt (14) sich von einem hinteren Endabschnitt der Basis (13) nach hinten erstreckt und eine äußere Umfangsfläche aufweist, die mit einem Schraubenabschnitt (16) versehen ist,
wobei die Spannkörper (33), die von dem Anschluss des optischen Faserkabels (31) führen, zwischen dem Gehäuse (2) und der Befestigungskappe (65) angeordnet sind, und die Befestigungskappe (65) dazu konfiguriert ist, auf den Befestigungsbereich (14) geschraubt und daran befestigt zu sein, und
wobei die Basis (13) geschwollene konvexe Abschnitte (64) aufweist, die an einem hinteren Endabschnitt der Seitenflächen (13a) der Basis (13) gebildet sind, wobei die geschwollenen konvexen Abschnitte (64) von den Seitenflächen (13a) der Basis (13) nach außen vorstehen und die Fläche der Abschnitte der Basis (13), die der Befestigungskappe (65) gegenüberstehen, vergrößern, und die Spannkörper (33) zwischen den geschwollenen konvexen Abschnitten (64) und einer vorderen Stirnfläche der Befestigungskappe (65) angeordnet sind, zur Erhöhung der Befestigungsstärke der Spannkörper (33), die zwischen der Basis (13) und der Befestigungskappe (65) angeordnet sind.

2. Optischer Steckverbinder nach Anspruch 1, wobei der Anschlagring (12) einen verlängerten zylindrischen Abschnitt (15) aufweist, der dünner als der Befestigungsabschnitt ist und sich von dem Befestigungsabschnitt (14) nach hinten erstreckt, und wobei der verlängerte zylindrische Abschnitt (15) mehrere ansteigende konvexe Abschnitte (63) aufweist, die in einer Umfangsrichtung gebildet sind.

3. Optischer Steckverbinder nach Anspruch 2, wobei die Befestigungskappe (65) einen Montageabschnitt (17) umfasst, der an dem Befestigungsabschnitt (14) montiert ist, und einen zylindrischen Verbindungsabschnitt (18), der sich von einem hinteren Endabschnitt des Montageabschnitts (17) nach hinten erstreckt, wobei ein operativer konvexer Abschnitt (67) an der Innenfläche des zylindrischen Verbindungsabschnitts (18) an einer Position gebildet ist, die die mehreren ansteigenden konvexen Abschnitte (63) erreicht, während die Befestigungskappe (65) auf den Befestigungsabschnitt (14) aufgeschraubt ist.

4. Optischer Steckverbinder nach einem der Ansprüche 1 bis 3, wobei ein Schutzrohr (43) einen Mantel (34) des optischen Faserkabels und die optische Faser (31) abdeckt,
wobei das Schutzrohr (43) einen zylindrischen Hauptröhrenkörper (54) und einen Verriegelungsvorsprung (55), der sich von dem Hauptröhrenkörper (54) nach außen erstreckt, aufweist, und
wobei der Verriegelungsvorsprung (55) so ausgebildet ist, dass er an einem stufigen Verriegelungsabschnitt (51) verriegelt ist, der an einer Innenfläche der Befestigungskappe (42) gebildet ist und eine Rückwärtsbewegung des Schutzrohres (43) verhindert.

5. Optischer Steckverbinder nach Anspruch 1,
wobei der Anschlagring (12) ferner einen verlängerten zylindrischen Abschnitt (15) aufweist, der sich von dem hinteren Endabschnitt des Befestigungsabschnitts (14) nach hinten erstreckt, wobei der verlängerte zylindrische Abschnitt (15) in einer zylindrischen Form ausgebildet ist, so dass ein Außendurchmesser des verlängerten zylindrischen Abschnitts (15) kleiner als der des Befestigungsabschnitts (14) ist,
wobei der Befestigungsabschnitt einen ersten zylindrischen Abschnitt (14a) und einen ersten Endwandabschnitt (14b), der sich von einem hinteren Ende des ersten zylindrischen Abschnitts nach innen erstreckt, aufweist, und die Befestigungskappe (65) einen zweiten zylindrischen Abschnitt (17a) und einen zweiten Endwandabschnitt (17b), der sich von einem hinteren Ende des zweiten zylindrischen Abschnitts (17a) nach innen erstreckt, aufweist, und
wobei die Spannkörper zwischen dem ersten Endwandabschnitt (14b) und dem zweiten Endwandabschnitt (17b) angeordnet sind.

6. Optischer Steckverbinder nach einem der Ansprüche 1 bis 5,
wobei ein ringförmiger Vorsprung (61) an dem Anschlagring (12) ausgebildet ist und mehrere Bewegungsverhinderungsausnehmungen (62), die an einer äußeren Umfangsfläche des ringförmigen Vorsprungs (61) ausgebildet sind, dazu angepasst sind, die Bewegung der Spannkörper (33) in Umfangsrichtung zu verhindern.

7. Verfahren zur Montage eines optischen Steckverbinders (1) an einen Anschluss eines optischen Faserkabels (31), in dem eine optische Faser (31) und Spannkörper (33), die sich in einer Längsrichtung der optischen Faser erstrecken, integriert sind,
wobei der optische Steckverbinder eine Hülse (21), an die eine eingebaute optische Faser (10) eingesetzt und befestigt ist, ein Gehäuse (2), das die Hülse (21) und die eingebaute optische Faser (10) in Längsrichtung beweglich aufnimmt, und eine Befestigungskappe (65), die an dem Gehäuse (2) montiert ist, aufweist,
wobei das Gehäuse (2) einen Steckerrahmen (11) und einen Anschlagring (12), der dazu konfiguriert ist, an einem hinteren Ende des Steckerrahmens (11) angepasst und befestigt zu sein, aufweist, wobei
der Anschlagring (12) eine Basis (13) und einen Befestigungsabschnitt (14) aufweist, wobei
ein Befestigungsabschnitt (14) sich von einem hinteren Endabschnitt der Basis (13) nach hinten erstreckt und eine äußere Umfangsfläche aufweist, die mit einem Schraubenabschnitt (16) versehen ist,
wobei die Befestigungskappe (65) auf den Befestigungsabschnitt (14) geschraubt und an diesen befestigt ist,
wobei die zu dem Anschluss des optischen Faserkabels freiliegende optische Faser an der eingebauten optischen Faser (10), die in die Hülse (21) eingeführt ist, anliegt und mit dieser verbunden ist,
wobei während die Spannkörper (33), die von dem Anschluss des optischen Faserkabels (31) führen, zwischen dem Gehäuse (2) und der Befestigungskappe (65) angeordnet sind, die Befestigungskappe (65) auf den Befestigungsbereich (14) geschraubt und daran befestigt wird, nach dem Verbinden der optischen Faser (32), und
wobei die Basis (13) geschwollene konvexe Abschnitte (64) aufweist, die an einem hinteren Endabschnitt der Seitenflächen (13a) der Basis (13) gebildet sind, wobei die geschwollenen konvexen Abschnitte (64) von den Seitenflächen der Basis (13) nach außen vorstehen und die Fläche der Abschnitte der Basis (13), die der Befestigungskappe (65) gegenüberstehen, vergrößern, und die Spannkörper (33) zwischen den geschwollenen konvexen Abschnitten (64) und einer vorderen Stirnfläche der Befestigungskappe (65) angeordnet sind, zur Erhöhung der Befestigungsstärke der Spannkörper (33), die zwischen der Basis (13) und der Befestigungskappe (65) angeordnet sind.

8. Verfahren nach Anspruch 7,
wobei der Befestigungsabschnitt einen ersten zylindrischen Abschnitt (14a) und einen ersten Endwandabschnitt (14b), der sich von einem hinteren Ende des ersten zylindrischen Abschnitts nach innen erstreckt, aufweist, und wobei die Befestigungskappe einen zweiten zylindrischen Abschnitt (17a) und einen zweiten Endwandabschnitt (17b), der sich von einem hinteren Ende des zweiten zylindrischen Abschnitts nach innen erstreckt, aufweist, und
wobei die Spannkörper (33) zwischen dem ersten Endwandabschnitt und dem zweiten Endwandabschnitt angeordnet sind.

9. Verfahren nach einem der Ansprüche 7 und 8,
wobei ein ringförmiger Vorsprung (61) an dem Anschlagring (12) ausgebildet ist und mehrere Bewegungsverhinderungsausnehmungen (62), die an einer äußeren Umfangsfläche des ringförmigen Vorsprungs (61) ausgebildet sind, dazu angepasst sind, die Bewegung der Spannkörper (33) in Umfangsrichtung zu verhindern.

## Revendications

1. Connecteur optique (1) qui est assemblé sur une borne d'un câble de fibre optique (31) où une fibre optique (32) et des corps de tension (33) s'étendant dans un sens longitudinal de la fibre optique sont intégrés, le connecteur optique comprenant :
un embout (21) dans lequel une fibre optique intégrée (10) est insérée et fixée ;
un logement (2) qui reçoit l'embout (21) et la fibre optique intégrée (10) de manière à pouvoir se déplacer dans le sens longitudinal ; et
un capuchon de fixation (65) qui est monté sur le logement (2),
dans lequel le logement (2) comprend un cadre de prise (11), et un anneau de butée (12) configuré pour être ajusté et fixé à une extrémité arrière du cadre de prise (11), dans lequel
l'anneau de butée (12) comprend une base (13) et une portion de fixation (14), dans lequel
la portion de fixation (14) s'étend vers l'arrière depuis une portion d'extrémité arrière de la base (13) et comporte une surface périphérique extérieure pourvue d'une portion de vis (16),
dans lequel les corps de tension (33) s'étendant depuis la borne du câble de fibre optique (31) sont interposés entre le logement (2) et le capuchon de fixation (65), et
le capuchon de fixation (65) est configuré pour être vissé sur la portion de fixation (14) et fixé à celle-ci, et
dans lequel la base (13) comprend des portions convexes gonflées (64) formées à une portion d'extrémité arrière de surfaces latérales (13a) de la base (13), les portions convexes gonflées (64) font saillie vers l'extérieur depuis les surfaces latérales (13a) de la base (13) et augmentent la superficie des portions de la base (13) faisant face au capuchon de fixation (65), et les corps de tension (33) sont interposés entre les portions convexes gonflées (64) et une surface d'extrémité avant du capuchon de fixation (65) pour augmenter la force de fixation des corps de tension (33) qui sont interposés entre la base (13) et le capuchon de fixation (65).

2. Connecteur optique selon la revendication 1, dans lequel l'anneau de butée (12) comprend une portion cylindrique étendue (15) qui est plus mince que la portion de fixation et qui s'étend vers l'arrière depuis la portion de fixation (14), et la portion cylindrique étendue (15) comprend une pluralité de portions convexes montantes (63) formées dans un sens circonférentiel.

3. Connecteur optique selon la revendication 2, dans lequel le capuchon de fixation (65) comprend une portion de montage (17) qui est montée sur la portion de fixation (14) et une portion de raccordement cylindrique (18) s'étendant vers l'arrière depuis une portion d'extrémité arrière de la portion de montage (17), une portion convexe opérationnelle (67) étant formée sur la surface intérieure de la portion de raccordement cylindrique (18) à une position qui atteint la pluralité de portions convexes montantes (63) pendant que le capuchon de fixation (65) est vissé sur la portion de fixation (14).

4. Connecteur optique selon l'une quelconque des revendications 1 à 3,
dans lequel un tube de protection (43) recouvre une chemise (34) du câble de fibre optique et la fibre optique (31),
dans lequel le tube de protection (43) comprend un corps principal de tube cylindrique (54) et une protubérance de verrouillage (55) qui s'étend vers l'extérieur depuis le corps principal de tube (54), et
dans lequel la protubérance de verrouillage (55) est formée de manière à être verrouillée à une portion échelonnée de verrouillage (51) formée sur une surface intérieure du capuchon de fixation (42) et empêcher un mouvement vers l'arrière du tube de protection (43).

5. Connecteur optique selon la revendication 1,
dans lequel l'anneau de butée (12) comprend en outre une portion cylindrique étendue (15) qui s'étend vers l'arrière depuis la portion d'extrémité arrière de la portion de fixation (14), la portion cylindrique étendue (15) étant de forme cylindrique de sorte qu'un diamètre extérieur de la portion cylindrique étendue (15) soit inférieur à celui de la portion de fixation (14),
dans lequel la portion de fixation comprend une première portion cylindrique (14a), et une première portion de paroi d'extrémité (14b) qui s'étend vers l'intérieur depuis une extrémité arrière de la première portion cylindrique, et le capuchon de fixation (65) comprend une deuxième portion cylindrique (17a) et une deuxième portion de paroi d'extrémité (17b) qui s'étend vers l'intérieur depuis une extrémité arrière de la deuxième portion cylindrique (17a), et
dans lequel les corps de tension sont interposés entre la première portion de paroi d'extrémité (14b) et la deuxième portion de paroi d'extrémité (17b).

6. Connecteur électrique selon l'une quelconque des revendications 1 à 5,
dans lequel une protubérance annulaire (61) est formée sur l'anneau de butée (12) et une pluralité d'évidements d'interdiction de mouvement (62) formés sur une surface périphérique extérieure de la protubérance annulaire (61) sont aptes à empêcher le mouvement des corps de tension (33) dans le sens circonférentiel.

7. Procédé d'assemblage d'un connecteur optique (1) sur une borne d'un câble de fibre optique (31) où une fibre optique (31) et des corps de tension (33) s'étendant dans un sens longitudinal de la fibre optique sont intégrés,
dans lequel le connecteur optique comprend un embout (21) dans lequel une fibre optique intégrée (10) est insérée et fixée, un logement (2) qui reçoit l'embout (21) et la fibre optique intégrée (10) de manière à pouvoir se déplacer dans un sens longitudinal, et un capuchon de fixation (65) qui est monté sur le logement (2),
dans lequel le logement (2) comprend un cadre de prise (11), et un anneau de butée (12) configuré pour être ajusté et fixé à une extrémité arrière du cadre de prise (11), dans lequel
l'anneau de butée (12) comprend une base (13) et une portion de fixation (14), dans lequel
une portion de fixation (14) s'étend vers l'arrière depuis une portion d'extrémité arrière de la base (13) et comporte une surface périphérique extérieure pourvue d'une portion de vis (16),
dans lequel le capuchon de fixation (65) est vissé et fixé sur la portion de fixation (14),
dans lequel la fibre optique exposée à la borne du câble de fibre optique vient en butée contre la fibre optique intégrée (10) insérée dans l'embout (21) et est raccordée à celle-ci,
dans lequel, pendant que les corps de tension (33) s'étendant depuis la borne du câble de fibre optique (31) sont interposés entre le logement (2) et le capuchon de fixation (65), le capuchon de fixation (65) est vissé et fixé sur la portion de fixation (14) après le raccordement de la fibre optique (32), et
dans lequel la base (13) comprend des portions convexes gonflées (64) formées à une portion d'extrémité arrière des surfaces latérales (13a) de la base (13), les portions convexes gonflées (64) font saillie vers l'extérieur depuis la surface latérale de la base (13) et augmentent la superficie des portions de la base (13) faisant face au capuchon de fixation (65), et les corps de tension (33) sont interposés entre les portions convexes gonflées (64) et une surface d'extrémité avant du capuchon de fixation (65) pour augmenter la force de fixation des corps de tension (33) qui sont interposés entre la base (13) et le capuchon de fixation (65).

8. Procédé selon la revendication 7,
dans lequel la portion de fixation comprend une première portion cylindrique (14a), et une première portion de paroi d'extrémité (14b) qui s'étend vers l'intérieur depuis une extrémité arrière de la première portion cylindrique, et le capuchon de fixation comprend une deuxième portion cylindrique (17a) et une deuxième portion de paroi d'extrémité (17b) qui s'étend vers l'intérieur depuis une extrémité arrière de la deuxième portion cylindrique, et
dans lequel les corps de tension (33) sont interposés entre la première portion de paroi d'extrémité et la deuxième portion de paroi d'extrémité.

9. Procédé selon l'une quelconque des revendications 7 et 8,
dans lequel une protubérance annulaire (61) est formée sur l'anneau de butée (12) et une pluralité d'évidements d'interdiction de mouvement (62) formés sur une surface périphérique extérieure de la protubérance annulaire (61) sont aptes à empêcher le mouvement des corps de tension (33) dans le sens circonférentiel.
